# EUROPEAN PATENT APPLICATION

(11) **EP 1 227 639 A2**
(43) Date of publication of application: **31.07.2002**
(21) Application number: 02250643.0
(22) Date of filing: 30.01.2002
(51) Int. Cl.: H04L 29/06

(54) **Network service for adaptive mobile applications**

(30) Priority: 30.01.2001 US 264948 P
(71) Applicant: AT&T Corp., New York, NY 10013-2412 (US)
(72) Inventor: Kim, Byoung-Jo, New York, New York 10013-2412 (US)
(74) Representative: Asquith, Julian Peter

(57) **Abstract**

A network service for providing data associated with a network to an application server is provided. The network service permits optimal use of adaptive applications, so that applications such as audio, video and web-transcoding can be implemented in conjunction with mobile wireless devices via a wireless network, even in the presence of dynamically-shifting network channel conditions. The network service may operate by receiving network performance information, translating the network performance information into abstracted data in a format compatible with the application server and sending the abstracted data to the application server. In this way, adaptive applications can be implemented in a standardized and efficient manner.

## Description

### Priority Information

This application claims priority to Provisional Application No. 60/264,968, which was filed on January 30, 2001, and which is hereby incorporated herein by reference.

### Background of the Invention

### Field of the Invention

The invention relates to adaptive applications employed by wireless devices. More specifically, the invention relates to an efficient and standard way of accessing wireless channel conditions within a network, so that optimal application adaptation can occur accordingly.

### Description of the Related Art

Wireless networks exist which allow primarily mobile devices to communicate with one another via a network infrastructure employed by a service provider. Conventional cellular telephone technology is an example of such networks and their use.

As mobile devices and network infrastructures have become more developed in terms of memory, processing power, transmission techniques, etc., a wider range of applications have become available to users of the mobile devices. For example, many mobile devices employ email, audio, video, World Wide Web access, Web-content transcoding (e.g., changing page layout due to content, presentation and/or bandwidth concerns) and various other types of applications, depending on the capability of the individual mobile device as well as the services provided by a corresponding service provider (and selected by the user).

Nonetheless, the resources and capabilities of such mobile devices and network infrastructures are far from limitless. In particular, various network channel conditions restrict the mobile devices and their associated network(s) from being utilized to the full extent of their capabilities. Such channel conditions are generally well-known, and include, for example, interference, fade and lack of available bandwidth (for example, due to high network usage rates).

Adaptive modulation, coding, power control and other resource management techniques have been developed for use in future generations of wireless technologies and networks (i.e., "3G Wireless Networks"). Such techniques require the sharing of a wealth of channel-condition information at the network level, so that service providers may allocate resources to individual users accordingly. Service providers thereby achieve overall improved network performance. However, these techniques cause individual mobile clients to experience constantly changing wireless-channel performance as a function of their time-of-use and location.

Also, "adaptive applications" have been developed for use at the server, proxy and/or client level. The "adaptive applications" are especially designed for mobile devices and wireless networks, such that the applications are capable of adapting to various changes or differences in their network environments. Such adaptive applications are especially important in light of the resource-allocation techniques just discussed in the context of 3G Wireless Networks, and are also helpful in coping with many other network/device characteristics, including varying form factors, low bandwidth, high error rates and mobility.

For example, adaptive applications may be utilized to manage optimally the downloading (or uploading) of concurrent information flows. Adaptive applications may also be used to download only a portion of available information when necessary or expedient, e.g., downloading only a text/audio portion of a presentation, without a video portion.

Conventional adaptive applications are implemented at a level of the applications themselves, while others are implemented transparently. No such conventional adaptive applications, in the context of an individual mobile device, however, are capable of functioning in an optimal manner based only on information collected by the individual mobile device. This is because such individual mobile devices do not have access to network-level channel-condition information discussed above, and so cannot adapt to such conditions accordingly.

Unfortunately, channel-condition information is typically only available at lower levels of wireless protocol stacks, such as at the physical layer and/or Medium Access Control (MAC) layer. Moreover, the various performance metrics used to characterize the channel condition often take many different forms specific to corresponding underlying wireless interfaces. In short, no known conventional solution exists for providing channel-condition information to mobile devices for use by adaptive applications.

Therefore, a need exists for a system and method for providing adaptive mobile applications with network-level channel-condition information in a standard and efficient manner, so that the adaptive applications can perform their desired functionality in an optimal manner.

### Summary of the Invention

The invention relates to a network service for providing data associated with a network to an application server. The network service permits optimal use of adaptive applications, so that applications such as, for example, audio, video and web-transcoding can be implemented in conjunction with mobile wireless devices via a wireless network, even in the presence of dynamically-shifting network channel conditions. In one embodiment, the network service operates by receiving network-performance information, translating the network-performance information into abstracted data in a format compatible with the application server and sending the abstracted data to the application server. In this way, adaptive applications can be implemented in a standardized and efficient manner.

In a second embodiment, the invention relates to a system for providing data associated with a network to an application server. The system can include a network interface configured to access network-performance information from a network, as well as an abstraction engine coupled to the network interface. The abstraction engine may be configured to translate the network performance information into abstracted data in a format compatible with the application server. Finally, an application interface may be coupled to the abstraction engine, and configured to send the abstracted data to the application server.

In a third embodiment, the invention relates to a method for receiving network data at an application server. The method can include receiving abstracted data, including network-performance information that has been translated into abstracted data in a format compatible with an application server. The method can further include adapting the operation of the application server based on the abstracted data.

The features and advantages of the invention will become apparent from the following drawings and description.

### Brief Description of the Drawings

The invention is described with reference to the accompanying drawings. In the drawings, like reference numbers indicate identical or functionally similar elements. Additionally, the left-most digit(s) of a reference number identifies the drawing in which the reference number first appears.
Fig. 1 shows a general network model according to an embodiment of the invention.
Fig. 2 is a flow chart demonstrating a methodology for implementing the embodiment of Fig 1.

### Detailed Description

While the invention is described below with respect to various embodiments, the invention is not limited to only those embodiments that are disclosed. Other embodiments can be implemented by those skilled in the art without departing from the spirit and scope of the invention.

In one embodiment of the invention, a network service is provided that processes channel-condition information for subsequent provision to adaptive mobile applications. The channel-condition information is efficiently processed, and thereafter presented to the adaptive applications in a standardized manner. In this way, the applications, even on a variety of platforms, are thereby aided in their adaptation processes.

In a further embodiment, the channel information includes a variety of known link-level performance metrics collected at the Physical (PHY) and/or Medium Access Control (MAC) layer(s). Such metrics might include, for example, Received Signal Strength Indicator (RSSI), Forward/Reverse Block Error Rate (FBLER/RBLER), Signal to Interference/Noise Ratio (SINR) and Block Error Rate (BLER).

In one embodiment of the invention, the performance metrics collected at the PHY/MAC layers are not communicated to the adaptive application layers via inter-layer communications interfaces. Rather, access between the layers is facilitated via a form of network service somewhat analogous to a conventional Domain Name Server (DNS) that relates Internet Protocol (IP) addresses to natural-language server names in the World Wide Web context. This network service will alternately be referred to hereinafter at the Wireless Channel Information (WCI) service.

One implementation of the invention involves taking advantage of channel-condition information during operation of a conventional 3G Wireless Network (or similar wireless network), in which channel-condition information is collected for the various known network-level purposes such as, for example, channel assignment, hand-off, modulation selections, buffer management, error recovery and accounting. The channel-condition information can be collected by the WCI from various network elements in the wireless network, as necessary to obtain a sufficiently accurate assessment of current channel conditions.

The WCI service can then translate the collected channel-condition information into an abstracted standardized format that can be understood at an application layer by the WCI network service just referred to, and provide the abstracted information to an application server in communication with the various mobile devices on the wireless network. In this way, the various applications will be able to access information in a manner that will permit them to optimally adapt their functionality. Definitions and rules by which the PHY/MAC layer information can be abstracted for example by using techniques such as Resource Description Framework (RDF) or Document Type Definition (DTD) using Extensible Markup Language (XML) standards.

According to this embodiment of the invention, neither adaptive applications nor their operating system(s) need to access and/or process the collected PHY/MAC parameters, which are often specific to particular wireless devices and interface technologies, as referred to above. Moreover, by utilizing existing channel-condition information, precious radio resources are not wasted in transmitting such information between mobile client applications and server applications at the precise time when radio links are already presumably degraded.

Also, wide-area wireless data network operators usually have full control over their networks. Thus, they have access to all necessary information in the network, and will be able to control via the proposed WCI network service how they are presented and communicated to applications in and outside of their networks. The network service should process and abstract raw channel-condition values gathered from wireless network elements into a set of clearly defined performance metrics and provide them in a flexible manner to adaptive applications on servers, proxies, and mobile clients.

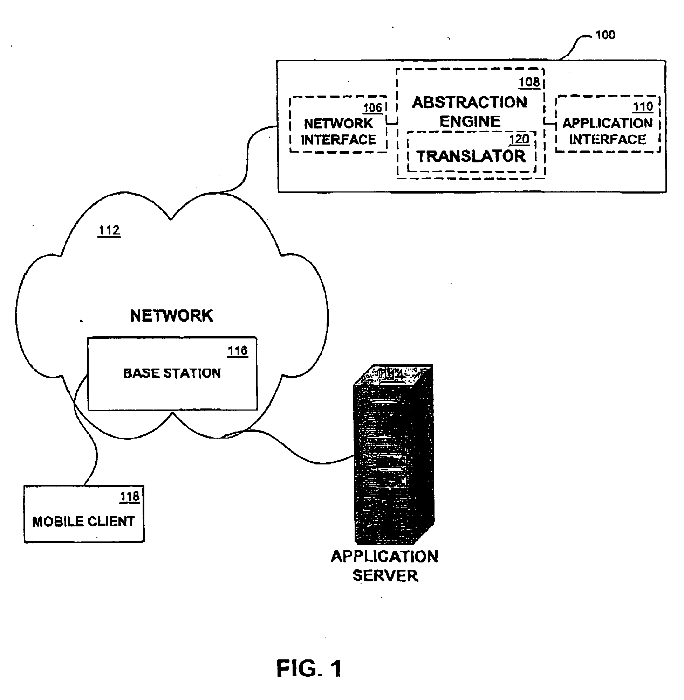

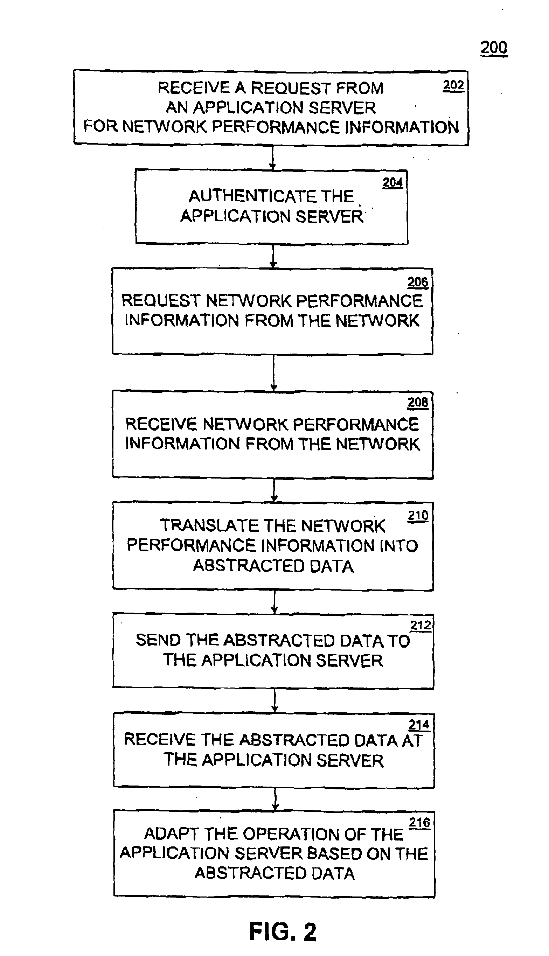

The above description of various embodiments of the invention generally describe some of the methodologies by which the invention provides an enabling mechanism for providing a standard way for adaptive applications to access wireless channel conditions. A particular embodiment of the invention, and related concepts, are herein below discussed in more detail with respect to Figs. 1 and 2.

Fig. 1 shows a general network model according to an embodiment of the invention. In Fig. 1, mobile client 118, base station 116, application server 114 and Wireless Channel Information (WCI) network service server (WCI server) 100 each communicate via network 112.

Network 112 can comprise a wireless access network with which the mobile client(s) 118 communicates over wireless links, as well as one or more wired networks where mobile applications servers 114 or proxies reside (i.e., a server network). This type of network scenario is common for many conventional wide-area wireless networks. Note that, as is known, a wireless access network can also double as a server network, if the network contains mobile application servers and/or proxies. Similarly, many conventional adaptive mobile applications involve servers, proxies and mobile clients such as described with respect to Fig. 1, in which most adaptation processes are performed at the servers or proxies inside wired networks. Such configurations are known to alleviate various wireless and mobility related difficulties for mobile clients.

In Fig. 1, WCI server 100 implements this embodiment of the invention. More specifically, the WCI server 100 implements the functionalities described above of interfacing with various network elements in the wireless access network, often via unique interfaces and protocols specific to the network technology, using network interface 106. In this way, WCI server 100 collects various parameters related to wireless channel conditions for the mobile client device 118. Based on these parameters, abstraction engine 108 can then abstract clearly-defined values of channel condition parameters (such as bandwidth and latency) in formats that applications can use. These definitions are agreed and specified using RDF or DTD techniques based on XML, as referred to above and discussed in more detail below. The transition from raw numerical measurements of channel condition parameters into an abstracted, standardized format takes place within translator 120. These results are dynamically communicated via application interface 110, via network 112, to adaptive applications in the server network represented by application server 114, to aid their adaptation decisions. The results can also be delivered to mobile clients 118 for similar purposes, if helpful and/or necessary.

Fig. 2 is a flow chart 200 demonstrating a methodology for implementing the embodiment of Fig. 1.

In step 202, it is assumed that a mobile client, a server, or a proxy has initiated, intercepted or is otherwise participating in a mobile application session across a wireless access network. WCI server 100 receives a request, via application interface 110, from application server 114 (or a proxy server, not shown) for network performance information. The server or proxy may locate the WCI server 100 via SLP (Service Location Protocol), DNS (Directory Name Service), CC/PP profile, or WAP UAProf.

In step 204, WCI server 100 authenticates the other party and verifies if the party is authorized by the network or the mobile client to interact with the server or the proxy. In step 206, assuming successful authorization/authentication, WCI server 100 requests network performance information from the network. Thereafter, in step 208, WCI server 100 receives network-performance information from the network (e.g., from a representative cross-section of various network elements).

In step 210, WCI server 100, using translator 120 within abstraction engine 108, translates the network-performance information into abstracted data. In step 212, the abstracted data is sent to application server 114 via application interface 110, and received at the application server at step 214. Then, beginning in step 216, application server can adapt its operation based on the abstracted data.

In step 216, requested service and the specifics of parameters are negotiated within profiles allowed by the mobile client 118 and/or a policy set by the wireless access network using XML objects, as discussed below. If possible and/or necessary, an event notification queue can be created for the session for hand-off or other specified changes in channel conditions.

Thereafter, the adaptive mobile application session is continued with timely and accurate adaptation being performed based on the information provided by the WCI server 100. The WCI server 100 obtains raw parameters from base stations and other network elements to derive the negotiated parameters (i.e., network-performance information) for the server or the proxy. For example, the mobile client's uplink and downlink SINR is used to predict/estimate packet error probability for the specified data flow and it is reported to the server/proxy periodically, upon request, or when a certain amount of change is detected. If a video stream is being transmitted to the mobile client, the server may change the block error correction coding scheme according to the present packet error rate. When no longer needed, the service is terminated and the associated resources are released.

The above-described network service is advantageous over a protocol and/or Application Program Interface (API) for direct server-client channel condition communication of wireless channel conditions. Some of the advantages of the former over the latter are referred to above; they are discussed in more detail below.

A protocol and/or Application Program Interface (API) for direct server-client channel condition communication of wireless channel conditions has at least the following disadvantages. First, precious radio resources are consumed for exchanging channel-condition information between client and server applications. Second, uplink channel conditions are often not available at mobile clients unless reported back from base stations. Third, Operating System (OS) level support is used to access detailed channel conditions by mobile applications because PHY/MAC layer functions are mostly hidden from the application layer. Fourth, each different wireless technology has somewhat different parameters and methods to indicate channel conditions. Thus, putting the interpretation of such parameters into applications and/or operating systems requires multitudes of system specific implementations at all mobile clients. Fifth, it requires a large population of mobile clients to implement such measures to justify the cost and effort of deploying adaptive applications in servers and proxies. Then again, it requires compelling adaptive applications to justify deploying such mobile clients. Thus, there is a "chicken and the egg" conundrum with respect to the direct server-client channel condition communication of wireless channel conditions.

On the other hand, at least the following advantages exist for providing a network service for WCI in wide-area wireless networks. First, rich information is already available on wireless channel conditions for both uplink and downlink inside wide-area wireless access networks. Thus, channel conditions can be accurately and efficiently estimated. Second, no radio resource is wasted for communicating channel conditions at application layer. Third, WCI service can be implemented once by wireless network operators that support a large number of mobile clients, which enables the immediate use of "transparent" adaptive applications for many mobile applications such as web-transcoding without modifications on client-side applications or OS. Thus, nontransparent applications can be gradually deployed thereafter at a later time. Fourth, by providing a standard way to access WCI services, adaptive applications and/or OS support for them do not need to be custom-written specifically for different wireless network technologies. One version should work over them all.

According to a software architecture of the WCI service in relation to adaptive applications and wireless network elements, the WCI server essentially has the two interfaces described above; i.e., application interface 110 and the network interface 106. Between these two interfaces, the WCI service has the abstraction engine 108 to process raw data obtained from the wireless access network elements and produce clearly defined and meaningful parameters such as, for example, "available bandwidth without error." IP packet error rate at a given packet size, and latency. The application interface 110 may use standard-based protocols for data exchange, and standard formats for parameters. The network interface 106 may use various protocols such as Simple Network Management Protocol (SNMP) and/or other network-specific interfaces to obtain necessary parameters.

Adaptive applications and WCI services can share a set of standard definitions for parameters of interest to implement the embodiment(s) of the invention discussed above. For example, "bandwidth" can mean different things to different applications and networks. Bandwidth may have the following attributes that may or may not be important to specific applications, or may or may not be easily obtained depending on wireless network technologies: peak, available, average, maximum, minimum bandwidth; observation period; average period; error-free or not; per-flow; per mobile client; predicted or observed.

Many adaptive applications are likely to be concerned about rough estimates of bandwidth as a guide to coarse adaptation decisions. For example, web image transcoding servers/proxies may only need to know "average error-free available" bandwidth to mobile clients for the next several seconds or maybe minutes to decide whether to transcode a particular image, or how aggressively to do so. More advanced adaptive applications such as wireless video may heed to know "peak", "maximum" or "minimum" bandwidth at what error rates to determine source rate, unequal protection strategy, and channel coding parameters at fairly fine time intervals. Also, the wireless network may not provide a certain information at a certain detail levels due to resource constraints, user requests, or other reasons. Thus, a clear need exists to communicate applications' needs and availability of certain information, either agreed apriori between applications and networks, or dynamically at the beginning of or during a session.

The use of XML and related standards provide various useful tools for implementing the invention. For example, DTD or XML Schema provides a flexible way to develop and exchange sets of parameter definitions (note that RDF Schemas may be used for WCI definitions as well, as referred to above). The known XLink standard can be used to refer to parameters common to many mobile users in the network. Additionally, XQL (XML Query Language), and XFI (XML fragment Interchange) allow the exchange of specific information of interest without sending complete XML documents. MathML (Mathematical Markup Language) can be used to describe simple mathematical formulae to request WCI service for a certain pre-processing to reduce the number of parameters being communicated.

XML-based descriptions and definitions can be relatively verbose. This can be a disadvantage if the information exchange occurs over wireless links as noted by the Composite Capabilities/Preference Profiles (CC/PP) working group. According to the described embodiments of the invention, however, most information exchange occurs within wired networks, presumably over high-speed network links.

Different transport protocols can be used between WCI server 100 and adaptive applications. For example, CC/PP is likely to use HTTP over TCP for its transport protocol with some extensions at HTTP. CONNEG is proposed to be independent of transport protocol, but it is likely to be over a reliable transport such as TCP. HTTP over TCP may be adequate for WCI services for infrequent exchange of parameters. As WCI services evolve to support more advanced adaptive applications, however, transport protocols can be used more efficiently for the rapid exchange of short messages after initial negotiations. In some cases, the transport protocol need not be reliable if parameters being exchanged have short life spans. Retransmitted information may be no longer meaningful after such delay. Thus, the use of transaction-like protocol over UDA in addition to HTTP over TCP may be useful.

The network interface 106 for accessing raw parameters from wireless access network elements may include SNMP and vendor or technology specific interfaces or protocols. For example, General Packet Radio Service (GPRS) base stations report SINR for mobile clients to a Serving GPRS Support Node (SGSN) to assist radio resource management. The protocol used for this process is defined in GPRS standard, and can be used by WCI services to estimate channel conditions. An implementation of WCI network-side interface 106 can target a specific technology to properly interface with base stations and other network elements.

For the 3G Wireless Networks, several major related network and air interface standards exist. For example, GPRS is likely to be the core network standard for EDGE and WCDMA air interface. There are various efficient ways to access base stations and other GPRS network elements utilizing existing signaling and possibly adding additional mechanisms to support WCI services.

Abstraction Engine 108 can make use of PHY and MAC layer performance metrics used in current and future wide-area wireless data networks in the form of RSSI, FBLER/RBLER, upstrearn/downstream SINR, BLER. These parameters should be translated, averaged, or otherwise processed to generate parameters defined for the application interface 110. For example, given SINR for an air interface, it is usually possible to estimate the error probability of a packet of a certain size. This probability can be provided as "predicted" error rate, or further used to deduce available error-free bandwidths based on the MAC retransmission strategy of the air interface. Some of such processing and abstraction can be relatively straightforward using simple algorithms. For abstraction requiring more complicated algorithms, lookup tables can be pre-calculated for most realistic cases.

Finally, exemplary approaches are discussed below for defining a few parameters to be exchanged between WCI services and adaptive applications. The approaches include obvious channel condition parameters that most applications can take advantage of, e.g., bandwidth, latency, and packet error rate.

The following general link parameters may be provided at the beginning of WCI sessions, or cached earlier for commonly-used networks. These parameters are fixed at least during the involved session and likely to be fixed for specific air interface technology. These static parameters may include the following: first, standard name for air interface technology and wireless network operator, e.g., EDGE by AT&T (this alone may be enough to indicate most static parameters, or may direct to a URL to locate such information); second, maximum bandwidth for a mobile client, i.e., peak rate; third, maximum, minimum payload size for MAC layer packets (this may be used to optimize IP packet sizes when MAC layer retransmission is not desired); fourth, minimum one-way latency (MAC framing and resource allocation strategy may impose a certain minimum latency; for example, a wireless interface with 20 msec framing with 5 frame interleaved coding results in 100msec minimum latency even with no queuing delay or retransmission delay); fifth, whether applications can configure MAC layer error recovery parameters and if so, how; sixth, default values for various parameters such as accuracy, expiration period, etc.

Bandwidth, as with the remaining channel condition parameter definitions to be discussed, can be defined based on at least three levels of detail.

At a first level, bandwidth can be defined as estimated present error-free average (over a specified period) IP layer bandwidth in bit/sec available to or from a mobile client or a specified flow (optional) to or from the mobile client. Note that bandwidth is defined in the context of virtual continuous stream of packets over a conceptually very long period of time, so that latency can be de-coupled from bandwidth. "Available" bandwidth means that the bandwidth that a user would experience at present, if there were packets to be transmitted to/from a mobile user (whether there is or not). "Error-free" is equivalent to so-called good-put, i.e., the number of correctly delivered bits over a specified period of time. The bandwidth values exchanged at this level are meant to only be a reasonable indication for current conditions, as the accuracy is not provided, and the values are supposed to be "best-effort" estimates by WCI services.

At a second level, bandwidth can be defined as estimated peak, average, and minimum bandwidth in bit/sec for a specified flow or a user at IP layer for a specified period of time. These can be provided whether there is actual traffic or not. It can indicate whether the bandwidth is error-free (MAC layer error recovery) or not (raw bandwidth). Peak and minimum rate may be accompanied by their occurrence ratios. Raw rate can be accompanied by the average packet- error-rate for one or more specified IP layer payload sizes. At level 2, WCI services are expected to provide more accurate estimates than at level 1, yet accuracy need not be provided. A reasonable estimate of the network round-trip delay between WCI services and applications is assumed available so that time periods can be specified relative to the present time.

At a third level, bandwidth can also include the following parameters; e.g., the accuracy of bandwidth estimates can be expressed in terms of confidence interval. It is possible to support MathML to exchange formulae or simple algorithms. Using the above definitions for bandwidth, a level 3 bandwidth can be described in XML, where level 1 and 2 use only subsets of level 3 elements.

Generally, latency seen at the IP layer can be conceptually defined as the time it takes to deliver an IP packet of zero length or a certain IP packet size.

At a first level, latency can be defined as estimated present average latency. This value should approximate the average time required for reliably delivering a packet of a certain length at IP layer over a specified period of time. This can take into account any link-layer retransmissions and framing delays. "Present" need not be precisely defined, as level 1 is to be used in rough estimates. Accuracy is not provided. If queuing-related delays are small, they can be ignored.

At a second level, latency can be defined as estimated present minimum, maximum or average latency to reliably or unreliably deliver an IP packet of a certain length at IP layer over a specified period of time. Queuing related delays should be included. The delay associated with link-layer error recovery should also be included. If the link does not support reliable transmissions, only average delay is supported. When the latency is defined for a zero length packet, there is no ambiguity rising from IP packet fragmentation at the link layer. If latency is defined for a certain IP packet size, the MAC layer fragmentation should be taken into account. For example, if the MAC layer packet size is 50 bytes at a given time, and the IP packet size on which latency is defined in 100 bytes, it takes two MAC packets to transmit a IT packet of that size, assuming no other overheads. If it takes 20 msec to transmit one MAC packet, the resulting latency is 40 msec. For a 101 byte IP packet, it takes 3 MAC packets, thus 60 mace. This is 50 percent higher latency instead of 1 % (101 bytes compared to 100 bytes).

At a third level, in addition to Level 2 parameters, the accuracy of latency estimates can be expressed in terms of confidence interval.

At a first level, Packet Error Rate can be defined as estimated present-IP-Packet error rate over a specified period of time, and/or the probability of error of a specified-length packet at IP layer. This should be available even when there were no packets that have been transmitted during the period. Thus, it should not solely rely on measurements but also use estimates based on parameters such as SINR. WCI services should calculate this value based on the link framing and other relevant parameters; i.e., if an IP packet of the specified length does not fit in a single MAC layer frame, the error rate should reflect the effect of fragmentation.

In addition to the first level, at a second level, a reasonable estimate of the network round-trip delay between WCI services and applications is assumed available so that time periods can be specified relative to the present time.

In addition to the second level, at a third level, the accuracy of error rate estimates can be included in terms of a confidence interval.

Connection Loss/Hand-off is a final parameter that may be useful. "Connection loss" can result from a variety of sources. For example, the degradation of channel conditions can cause the available bandwidth to decrease to a level where the link is no longer usable. Another common cause of connection loss is hand-off. Shortly before and after a hand-off, a mobile user can experience a period of loss of connection for a certain period of time, depending on the implementation of hand-off. No matter the cause of connection loss, mobile applications may only be concerned about the time of connection loss, its duration, and whether it is expected to be temporary or not. Although connection loss can be represented as zero bandwidth and/or large or infinite latency, the explicit knowledge of a connection loss can be useful to some advanced applications which need to anticipate connection loss and re-establishment. For example, reducing a TCP transmit window due to a temporary connection loss causes a period of low throughput after connection re-establishment, due to TCP slow-start. If the application simply stops transmitting during the connection loss, however, TCP does not observe packet losses, and maintains its transmit window size.

For connection loss/hand-off, there is no first-level connection loss definition; zero bandwidth or infinite latency can be used to indicate that currently a specified user cannot communicate.

A second level definition for connection loss/hand-off may include a period of time during which a specified user cannot receive and/or transmit. It may be available when requested or as a notification service. It should indicate the start time and the duration. The duration can be a typical value, an estimate, infinite or unknown if the mobile network cannot estimate. In the latter case, the WCI service should notify again connection re-establishment. For hand-off, the mobile network may have an estimate of the time until connection re-establishment. In some cases, the wireless network may be able to anticipate impending hand-off. Such knowledge can be used to notify connection loss that is about to occur.

A third level may include the second level, and should indicate the cause of connection loss such as "link degradation," or "hand-off." Also, the accuracy of the time and duration of connection loss can be optionally provided. For example, the mobile network may have an estimate of the probability of hand-off failure, or the maximum duration over which the network attempts to establish a new link.

In conclusion, the invention contemplates a network service that collects and processes PHY/MAC layer parameters for wireless channel conditions and provides them to adaptive mobile applications in clearly defined abstracted forms, to aid them in their adaptation decision-making. This methodology overcomes one of the major hurdles in deploying powerful adaptive applications for mobile clients; i.e., lack of efficient access to wireless channel conditions. A WCI service is described for implementing these techniques, so that applications and OS's do not have to access and process wireless PHY/MAC layer parameters that are often specific to wireless interface technologies. This approach is very effective for the upcoming 3G wide-area wireless networks, because a rich set of information on wireless channel conditions is already available in 3G networks, and their use of adaptive modulations creates highly fluid network performance environments for mobile applications.

While this invention has been described in various explanatory embodiments, other embodiments and variations can be effected by a person of ordinary skill in the art without departing from the scope of the invention. In particular, the invention may be utilized as a standard wireless network service for mobile adaptive applications, much like DNS, email, web caching and on-line chatting have become basic network services for most ISP's.

## Claims

1. A method for providing data associated with a network to an application server, comprising:
receiving network performance information;
translating the network performance information into abstracted data in a format compatible with the application server; and
sending the abstracted data to the application server.

2. The method of claim 1, wherein the network performance information is associated with a wide-area wireless data network.

3. The method of claim 1, wherein the network performance information is associated with a local-area wireless data network.

4. The method of claim 1, wherein the network performance information corresponds to operation data associated with a network, the operation data includes wireless-channel-conditions associated with an operation of the network.

5. The method of claim 1, wherein said receiving includes receiving the network performance information in a format based on a protocol compatible with the network.

6. The method of claim 1, wherein said translating includes translating the network performance information into abstracted data in a format compatible with the application server, the abstracted data being configured to be executed by the application server having at least one adaptive mobile application.

7. The method of claim 1, wherein said sending includes sending the abstracted data to the application server based on an XML standard.

8. The method of claim 1, Wherein the abstracted data is in a format compatible with the application server, the abstracted data including a first subset of data to be processed by the application server and a second subset of data not to be processed by the application server.

9. The method of claim 1, further comprising:
authenticating the application server before sending the abstracted data to the application server.

10. The method of claim 1, further comprising:
sending the abstracted data to a mobile client.

11. The method of claim 1, further comprising;
selecting a protocol from a plurality of protocols, the selected protocol being compatible with the network.

12. A system for providing data associated with a network to an application server, comprising:
a network interface, said network interface being configured to access network performance information from a network;
an abstraction engine coupled to said network interface, said abstraction engine being configured to translate the network performance information into abstracted data in a format compatible with the application server; and
an application interface coupled to said abstraction engine, said application interface being configured to send the abstracted data to the application server.

13. The system of claim 12, wherein the network interface is configured to access network performance information associated with a wide-area wireless data network.

14. The method of claim 12, wherein the network performance information is associated with a local-area wireless data network.

15. The system of claim 12, wherein the network performance information corresponds to operation data associated with a network, the operation data includes wireless-channel-conditions associated with an operation of the network.

16. The system of claim 12, wherein said network interface is configured to access network performance information from the network based on a protocol compatible with the network.

17. The system of claim 12, wherein said abstraction engine is configured to translate the network performance information into abstracted data in a format compatible with the application server, said abstracted data being configured to be executed by the application server having at least one adaptive mobile application.

18. The system of claim 12, wherein said application interface is configured to send the abstracted data to the application server based on a standard protocol.

19. The system of claim 12, wherein said application interface is configured to send the abstracted data to the application server based on an XML standard.

20. The system of claim 12, wherein the abstracted data is compatible with the application server, the abstracted data including a first subset of data to be processed by the application server and a second subset of data not to be processed by the application server.

21. The system of claim 12, wherein said application interface is configured to authenticate the application server before sending the abstracted data to the application server.

22. The system of claim 12, wherein said application interface is configured to send the abstracted data to a mobile client.

23. A method for receiving network data at an application server, comprising:
receiving abstracted data, the abstracted data being network performance information that has been translated into abstracted data in a format compatible with an application server; and
adapting the operation of the application server based on the abstracted data.

24. The method of claim 23, wherein the performance information is associated with a wide-area wireless data network.

25. The method of claim 23, wherein the network performance information is associated with a local-area wireless data network.

26. The method of claim 23, wherein the network performance information corresponds to operation data associated with a network, the operation data includes wireless channel conditions associated with the operation of the network.

27. The method of claim 23, wherein said receiving includes receiving abstracted data configured to be executed by the application server having adaptive mobile applications.

28. The method of claim 23, wherein said receiving includes receiving the abstracted data based on a standard protocol.

29. The method of claim 23, wherein said receiving includes receiving the abstracted data based on XML standards.

30. The method of claim 23 further comprising;
sending a request associated with network performance information.

31. The method of claim 23, wherein said adapting includes adapting the operation of the application server in response to the information included in the received abstracted data.
